# EUROPÄISCHE PATENTSCHRIFT

(11) **EP 3 625 530 B1**
(45) Veröffentlichungstag und Bekanntmachung des Hinweises auf die Patenterteilung: **17.07.2024**
(21) Anmeldenummer: 18762221.2
(22) Anmeldetag: 16.05.2018
(51) Int. Cl.: G01L 5/1627, G01L 25/00, G01L 1/22, G01L 3/10, G01L 3/14, G01L 5/00, G01L 5/16

(54) **DOPPELFLANSCH-DREHMOMENTAUFNEHMER-SYSTEM UND VERFAHREN ZUR MESSUNG EINES DREHMOMENTS**
DOUBLE-FLANGE TORQUE SENSOR SYSTEM AND PROCEDURE FOR TORQUE MEASUREMENT
SYSTÈME DE CAPTEUR DE COUPLE À DOUBLE BRIDE ET PROCÉDURE DE MESURE DU COUPLE

(30) Priorität: 16.05.2017 DE 102017004680
(43) Veröffentlichungstag der Anmeldung: 25.03.2020
(73) Patentinhaber: Hottinger Brüel & Kjaer GmbH, 64293 Darmstadt (DE)
(72) Erfinder: ANDRAE, Jürgen, 64331 Weiterstadt (DE); VIERATH, Rene, 67578 Gimbsheim (DE); WÜRFL, Norbert, 63834 Sulzbach (DE); GOTTSCHLING, Anke, 64287 Darmstadt (DE)
(74) Vertreter: Müller, Thomas
(86) Internationale Anmeldenummer: PCT/DE2018/000146
(87) Internationale Veröffentlichungsnummer: WO 2018/210365

(56) Entgegenhaltungen:
- DD-A1- 130 690
- DD-A1- 130 690
- DE-A1- 102004 033 925
- DE-A1- 102004 033 925
- DE-A1- 102010 034 638
- DE-A1- 102010 034 638
- JP-A- 2010 169 586
- JP-A- 2010 169 586

## Beschreibung

Die Erfindung betrifft ein Doppelflansch-Drehmomentaufnehmer-System und ein Verfahren zur Messung eines Drehmoments. Das Doppelflansch-Drehmomentaufnehmer-System hat einen flanschförmige Drehmomentaufnehmer, der relativ unempfindlich gegen Störkräfte ist und der zusätzlich auch für besonders hohe Drehzahlen geeignet ist. Ein derartiger Drehmomentaufnehmer hat zwei Befestigungsscheiben, nachfolgend als Flansche bezeichnet. Ein Flansch dieses Typs Drehmomentaufnehmer ist mit einer Antriebswelle, der andere Flansch mit einer von der Antriebswelle in Drehung zu setzenden Welle verschraubt. Beide Flansche sind mit einem Verformungselement verbunden, das sich unter dem Einfluss eines Drehmoments elastisch verformt. An ausgewählten Stellen des Verformungselements sind Dehnungsmessstreifen appliziert, um die an diesen Stellen auftretende Dehnung zu messen, die proportional zur Größe des Drehmoments ist. Diese Verformungselemente gibt es in unterschiedlichen Geometrien, wobei Biegekräfte oder Scherkräfte gemessen werden. Ein derartiger flanschförmiger Drehmomentaufnehmer ist in dem Dokument JP 2010169586 A beschrieben.

Charakteristisch für diese Verformungselemente ist, dass die Stellen, an denen die Dehnungsmessstreifen appliziert sind, ein Dehnungsverhalten aufweisen, das streng proportional dem anliegenden Drehmoment ist. Es handelt sich hierbei jedoch um eine theoretische Annahme. In der Praxis kommt es vor, dass die beiden Wellen nicht genau in der gleichen Achse liegen, wobei drei Fälle zu unterscheiden sind: Die Achsen sind parallel zueinander leicht versetzt oder sie stehen in einem Winkel zueinander oder die Achsen sind parallel zueinander versetzt und stehen auch in einem Winkel zueinander. In allen drei Fällen werden auf das Messelement zusätzliche Kräfte übertragen. In Abhängigkeit von der speziellen Geometrie des Verformungselements entstehen unterschiedlich große Messfehler.

Ein bisher üblicher Weg zur Verhinderung bzw. Verringerung solcher Messfehler ist die möglichst starre Ausbildung des Verformungselements. Diesem Weg sind jedoch physikalisch Grenzen gesetzt. Je steifer das Verformungselement ist, umso geringer ist die auftretende Dehnung und somit auch das Messsignal. Wenn das Verformungselement weniger starr ist, ergibt sich eine größere Dehnung und somit auch ein größeres Messsignal. Allerdings wird das Messsignal unerwünscht stark verfälscht, wenn einer der drei vorstehend genannten Fälle auftritt, bei welchen die Lage der beiden Wellenachsen nicht genau übereinstimmt. Somit ist ein Kompromiss zu finden zwischen einem dickeren, d.h. steiferen Verformungselement und einem dünnen Verformungselement, d. h. weniger steifen Verformungselement. Wenn jedoch die Anforderung nach hohen Drehzahlen gestellt wird, sollte der Abstand der Dehnungsmessstreifen vom Rotationszentrum möglichst gering sein, damit die auf die Dehnungsmessstreifen wirkenden Fliehkräfte gering sind. Insofern ist unter dieser Anforderung ein möglichst dünnes Verformungselement zu bevorzugen.

Bei einem aus der EP 0 575 634 A1 bekannten Drehmomentsensor sind die Verformungsbereiche in Stegen vorgesehen, die sich radial oder axial zwischen zwei Anschlussflanschen erstrecken, wobei pro Steg jeweils zwei Messwertaufnehmer zur Ermittlung der Biegedehnung angeordnet sind und durch eine geeignete Brückenschaltung dafür gesorgt werden soll, dass Querkräfte, Quermomente unterschiedliche Momenteinleitung und ungleichmäßiges Verschrauben möglichst weitgehend kompensiert werden. Dieser Drehmomentsensor soll sich außerdem durch ein geringes Massenträgheitsmoment und hohe Messempfindlichkeit auszeichnen. Es hat sich jedoch herausgestellt, dass derartige Drehmomentsensoren beim Messen von Biegedehnungen gegen Einflüsse von Längs- und Querkräften sehr empfindlich sind und außerdem bei hohen Drehzahlen eine Nullpunktverschiebung bewirken, die schwer zu kompensieren ist. Dieser unerwünschte Effekt wird durch die sehr weit außen liegenden Dehnungsmessstreifen verursacht, weil darauf sehr hohe Fliehkräfte wirken.

Aus der DE 32 12 946 A1 ist ein Drehmomentmesssystem bekannt, das als Rohr ausgebildet ist. Über den Rohrumfang sind in der Rohrwand vier im Wesentlichen rechteckige Aussparungen vorgesehen, um vier in axialer Richtung sich erstreckende Stege auszubilden. Die Mantelfläche jedes Stegs dient zur Aufnahme eines Dehnungsmessstreifens in Form eines Scherkraftaufnehmers. Mit diesen Dehnungsmessstreifen kann ein auf das so konfigurierte Rohr aufgebrachtes Drehmoment gemessen werden. Wenn ein derartiges Messsystem eine hinreichende Biegesteifigkeit gewährleisten soll, sind aber relativ große Außendurchmesser erforderlich, die häufig Nachteile aufweisen.

Auch in dem Dokument DE 102015110861 A1 wird das vorstehend genannte Problem beschrieben, das bei parallelem und bei winkligem Versatz der miteinander zu verbindenden Wellen auftritt.

Es ist somit die Aufgabe der Erfindung, eine Vorrichtung bereitzustellen, die eine besonders genaue Messung des Drehmoments auch dann ermöglicht, wenn die beiden miteinander verbundenen Wellen nicht genau in der gleichen Achse liegen. Außerdem soll die genaue Messung auch bei hohen Drehzahlen möglich sein und weiterhin soll eine Möglichkeit geschaffen werden, weitere Messfehler zu korrigieren, die z. B. durch Vibrationen entstehen.

Die Aufgabe wird mit einem Doppelflansch-Drehmomentaufnehmer-System und einem Messverfahren nach den Ansprüchen 1 und 4 gelöst.

Der besondere Vorteil dieses Doppelflansch-Drehmomentaufnehmer-Systems nach Anspruch 1 liegt auch darin, dass es auch für sehr hohe Drehzahlen geeignet ist. Der Grund dafür ist, dass das in der Drehachse des Doppelflansch-Drehmomentaufnehmers liegende Verformungselement einen vergleichsweise relativ geringen Durchmesser aufweist. Unter einem relativ geringen Durchmesser ist folgendes zu verstehen: Wenn ein Doppelflansch-Drehmomentaufnehmer ohne die stabförmige Federelemente verwendet werden soll, muss das Verformungselement einen größeren Durchmesser haben, damit es die notwendige Steifheit aufweist. Wenn die Dehnungsmesstreifen jedoch auf einem Verformungselement mit einem größeren Durchmesser angeordnet und somit die elektrischen Anschlussdrähte von der Drehachse weiter entfernt sind, entstehen an den Dehnungsmessstreifen und den elektrischen Anschlussdrähten auch größere Zentrifugalkräfte. Bei der Konstruktion nach Anspruch 1 kann der Durchmesser des Verformungselements demzufolge gering ausgebildet sein, sodass auch die auftretenden Zentrifugalkräfte an den Dehnungsmessstreifen gering sind. Demzufolge treten auch bei hohen Drehzahlen vergleichsweise geringe Zentrifugalkräfte auf. Somit haben die Federelemente mit dem Rechteckquerschnitt eine Doppelfunktion: Einerseits werden Korrektur-Messignale bereitgestellt, mit deren Hilfe das Drehmomenten-Messsignal korrigiert werden kann und andererseits kann das Verformungselement relativ dünn ausgebildet sein, sodass die Abstände der Dehnungsmesstreifen vom Rotationszentrum des Doppelflansch-Drehmomentaufnehmers gering gehalten werden können.

Nach Anspruch 2 bestehen die Federelemente aus einem anderen Material als das Verformungselement.

Nach Anspruch 3 weist das Material der Federelemente eine andere Federkonstante als das Material des Verformungselements auf.

Konstruktionen nach den Ansprüchen 2 und 3 ermöglichen die Erfüllung spezifischer Anforderungen bezüglich des Schwingungsverhalten, d. h. der Eigenfrequenz des Doppelflansch-Drehmomentaufnehmers, was besonders bei Motorenprüfständen von Bedeutung sein kann.

Die Erfindung wird nachfolgend an Hand der beigefügten schematischen Zeichnung näher erläutert:

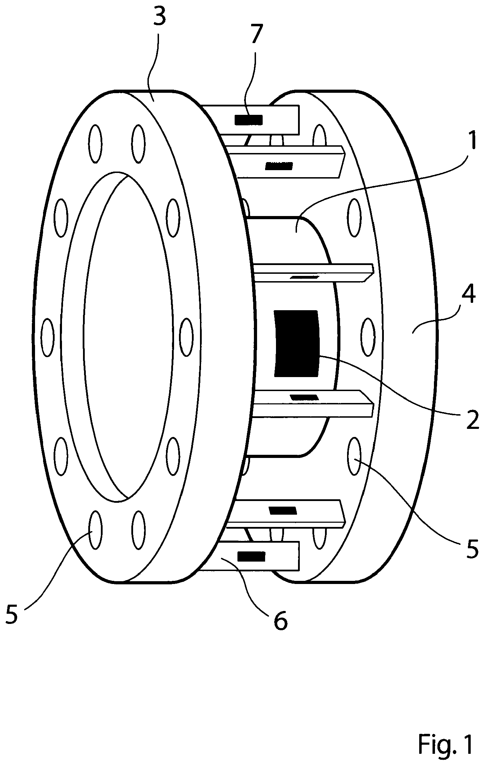

- Fig. 1: zeigt einen Doppelflansch-Drehmomentaufnehmer mit Federelementen, auf denen Dehnungsmessstreifen appliziert sind.

Die Fig. 1 zeigt einen Doppelflansch-Drehmomentaufnehmer mit folgenden Merkmalen:
Zwei parallel zueinander angeordnete scheibenförmige Befestigungsflansche (3, 4) aus Stahl und ein zylinderförmiges Messelement (1) sind einstückig gefertigt. Auf der Oberfläche des zylinderförmigen Messelements (1) sind Dehnungsmessstreifen (2) appliziert, die in den Zeichnungen nur symbolisch dargestellt sind. Das Verformungselement (1) hat einen kreisförmigen Querschnitt und ist um die Drehachse des Doppelflansch-Drehmomentaufnehmers angeordnet, d.h. rotationssymmetrisch zu dieser. Die Befestigungsflansche (3, 4) sind mit Bohrungen (5) entsprechend den an der Stirnseite jeder der beiden Wellen vorhandenen Bohrungen versehen. Zwischen den Befestigungsbohrungen sind Federelemente (6) mit rechteckigem Querschnitt angeordnet. Die schmale Seite des Querschnitts ist radial auf das Rotationszentrum des Doppelflansch-Drehmomentaufnehmers gerichtet. Auf jedem der Federelemente ist eine DMS-Halbbrücke (7) appliziert.

Von dem mit beiden Wellen verschraubten Doppelflansch-Drehmomentaufnehmer wird ständig das aufgebrachte Drehmoment gemessen. Die Drehmomentmesssignale werden einer Korrektur-Elektronik zugeführt. Gleichzeitig werden die an den Federelementen auftretenden Dehnungen gemessen und die daraus resultierenden Messsignale ebenfalls der Korrektur-Elektronik zugeführt. Die Korrektur-Elektronik weist eine Speichereinheit auf, in der durch einen Kalibriervorgang gewonnene Korrekturdaten gespeichert sind und die zur Korrektur des Drehmoment-Messsignals verwendet werden.

## Patentansprüche

1. Doppelflansch-Drehmomentaufnehmer-System, das folgende Merkmale aufweist:
- ein Verformungselement (1), an dem Dehnungsmessstreifen (2) befestigt sind,
- zwei parallel zueinander angeordnete scheibenförmige Befestigungsflansche (3, 4), die mit dem Verformungselement (1) integral verbunden sind, wobei
- das Verformungselement (1) in der Drehachse des Doppelflansch-Drehmomentaufnehmers liegt und
- die Befestigungsflansche (3, 4) Befestigungsbohrungen (5) aufweisen,
- wenigstens 3 stabförmige Federelemente (6), die sich zwischen den beiden Flanschen (3, 4) erstrecken und an diesen entweder zwischen den Befestigungsbohrungen (5) oder im Randbereich der Befestigungsflansche (3, 4) außerhalb der Befestigungsbohrungen (5) befestigt sind, wobei
- die Federelemente einen rechteckigen Querschnitt aufweisen, deren eine schmale Seite radial auf die Drehachse des Doppelflansch-Drehmomentaufnehmers gerichtet ist, **dadurch gekennzeichnet, dass**
- auf jedem Federelement wenigstens ein Dehnungsmessstreifen (7) angeordnet ist und
- eine Korrektur-Elektronik vorgesehen ist, der die mit den Dehnungsmessstreifen (2) gemessenen Drehmomentmesssignale und gleichzeitig die an den Dehnmessstreifen (7) der Federelemente (6) erzeugten Messsignale zugeführt werden.

2. Doppelflansch-Drehmomentaufnehmer-System nach Anspruch 1, wobei die Federelemente (6) aus einem anderen Material als das Verformungselement (1) bestehen.

3. Doppelflansch-Drehmomentaufnehmer-System nach Anspruch 1, wobei das Material der Federelemente (6) eine andere Federkonstante als das Material des Verformungselements (1) aufweist.

4. Verfahren zur Messung eines Drehmoments mit einem Doppelflansch-Drehmomentaufnehmer-System nach Anspruch 1, wobei das Verfahren nachfolgende Schritte aufweist:
a. Messen des Drehmoments mittels des Verformungselements (1) und gleichzeitig separates Messen der an den wenigstens 3 Federelementen (6) auftretenden Dehnungen,
b. Korrektur des Drehmoment-Messsignals mit Hilfe der an den wenigstens 3 Federelementen (6) gemessenen Dehnungswerte mit Hilfe vorher ermittelter Korrekturdaten.

## Claims

1. Double flange torque transducer system, comprising the following features:
- a deformation element (1) to which strain gauges (2) are attached,
- two disc-shaped fastening flanges (3, 4) which are arranged parallel to one another and which are integrally connected to the deformation element (1), wherein
- the deformation element (1) lies in the axis of rotation of the double-flange torque transducer and
- the mounting flanges (3, 4) comprise mounting holes (5),
- at least 3 rod-shaped spring elements (6) which extend between the two flanges (3, 4) and are fastened thereto either between the fastening bores (5) or in the edge region of the fastening flanges (3, 4) outside the fastening bores (5), wherein
- the spring elements comprise a rectangular cross-section, of which one narrow side is directed radially towards the axis of rotation of the double-flange torque transducer, **characterised in that**
- at least one strain gauge (7) is arranged on each spring element, and
- a correction electronics is provided, to which the torque measurement signals measured with the strain gauges (2) and simultaneously the measurement signals generated at the strain gauges (7) of the spring elements (6) are applied.

2. Double-flange torque transducer system according to claim 1, wherein the spring elements (6) are made of a different material than the deformation element (1).

3. Double-flange torque transducer system according to claim 1, wherein the material of the spring elements (6) has a different spring constant than the material of the deformation element (1).

4. Method for measuring a torque with a double-flange torque transducer system according to claim 1, wherein the method comprises the following steps:
a. Measurement of the torque by means of the deformation element (1) and simultaneous separate measurement of the strains occurring on the at least 3 spring elements (6),
b. Correction of the torque measurement signal using the strain values measured on the at least 3 spring elements (6) with the aid of previously determined correction data.

## Revendications

1. Système enregistreur de couple de rotation à double bride qui présente les caractéristiques suivantes :
- un élément de déformation (1) auquel des jauges de contrainte (2) sont fixées,
- deux brides de fixation (3, 4) en forme de disque agencées parallèlement l'une à l'autre qui sont reliées d'un seul tenant à l'élément de déformation (1), dans lequel
- l'élément de déformation (1) se trouve dans l'axe de rotation de l'enregistreur de couple de rotation à double bride et
- les brides de fixation (3, 4) présentent des perçages de fixation (5),
- au moins 3 éléments de ressort (6) en forme de barre qui s'étendent entre les deux brides (3, 4) et sont fixés à celles-ci entre les perçages de fixation (5) ou dans la zone de bord de la bride de fixation (3,4) en dehors des perçages de fixation (5), dans lequel
- les éléments de ressort présentent une section transversale rectangulaire, dont un côté étroit est dirigé radialement vers l'axe de rotation de l'enregistreur de couple de rotation à double bride, **caractérisé en ce que**
- au moins une jauge de contrainte (7) est agencée sur chaque élément de ressort et
- une électronique de correction est prévue, à laquelle sont fournis les signaux de mesure de couple de rotation mesurés avec les jauges de contrainte (2) et simultanément les signaux de mesure générés au niveau des jauges de contrainte (7) des éléments de ressort (6).

2. Système enregistreur de couple de rotation à double bride selon la revendication 1, dans lequel les éléments de ressort (6) se composent d'un autre matériau que de celui de l'élément de déformation (1).

3. Système enregistreur de couple de rotation à double bride selon la revendication 1, dans lequel le matériau des éléments de ressort (6) présente une autre constante de ressort que celle du matériau de l'élément de déformation (1).

4. Procédé de mesure d'un couple de rotation avec un système enregistreur de couple de rotation à double bride selon la revendication 1, dans lequel le procédé présente les étapes suivantes :
a. mesure du couple de rotation au moyen de l'élément de déformation (1) et simultanément la mesure séparée des allongements survenant au niveau des au moins 3 éléments de ressort (6),
b. correction du signal de mesure de couple de rotation à l'aide des valeurs d'allongement mesurées au niveau des au moins 3 éléments de ressort (6) à l'aide de données de correction calculées au préalable.
